# EUROPEAN PATENT APPLICATION

(11) **EP 2 169 989 A1**
(43) Date of publication of application: **31.03.2010**
(21) Application number: 08165432.9
(22) Date of filing: 29.09.2008
(51) Int. Cl.: H04W 8/26

(54) **Method and apparatus**

(71) Applicant: Nokia Siemens Networks OY, 02610 Espoo (FI)
(72) Inventor: Döttling, Martin, 85579, Neubiberg (DE); Michel, Jürgen, 81737, Munich (DE)
(74) Representative: Style, Kelda Camilla Karen

(57) **Abstract**

A system comprising a plurality of nodes, information on a plurality of allocatable parameter values being associated with at least two first nodes, at least one second node being arranged to use at least one of said allocatable parameter values, said system comprising means for determining from said information for at least two of said first nodes which of said allocatable parameter values is available, means for allocating a parameter value which is commonly available with respect to said at least two of said first nodes to one of said second nodes and means for updating said information when said parameter is allocated to said one of said second nodes.

## Description

### FIELD OF THE INVENTION

The present invention relates to apparatus and methods.

### BACKGROUND

A communication system is a facility which facilitates communication between two or more entities such as communication devices, network entities and other nodes. A communication system may be provided by one or more interconnect networks and the elements thereof. One or more gateway nodes may be provided for interconnecting various networks. The communication may comprise, for example, communication of data for carrying communications such as voice, electronic mail (email), text message, multimedia and so on. A communication system typically operates in accordance with a standard and/or a set of specifications and protocols which set out what the various elements of the system are permitted to do and how that should be achieved. Also, the manner user communication devices can access a communication system is typically defined, as is the manner in which communications should be implemented between the communication device and various elements of the communication system.

A user may communicate via a communication system and access various applications by means of an appropriate communication device. The communication devices are often referred to as user equipment (UE). An appropriate access system allows the communication device to communicate via the communication system. An access to the communications system may be provided by means of a fixed line or wireless communication interface, or a combination of these. Examples of wireless systems include cellular networks, various wireless local area networks (WLANs), wireless personal area networks (WPANs), satellite based communication systems and various combinations of these.

In wireless systems a network entity such as a base station provides an access node for communication devices. It is noted that in certain systems a base station is called 'Node B'. Typically the operation of a base station node and other apparatus of an access system required for the communication is controlled by an appropriate control entity. The control entity can be interconnected with other control entities of the communication network.

### SUMMARY

According to one aspect there is provided a system comprising a plurality of nodes, respective information on a plurality of allocatable parameter values being associated with at least two first nodes, at least one second node being arranged to use at least one of said allocatable parameter values, said system comprising means for determining for said information associated with at least two of said first nodes which of said allocatable parameter values is available, means for allocating a parameter value which is commonly available with respect to said at least two of said first nodes to one of said second nodes, and means for updating said information when said parameter is allocated to said one of said second nodes.

The means for determining may be provided in at least one:
said one of said second nodes; at least one of said at least two of said first nodes; at least one third node.

The allocating means may be provided in at least one of:
said one of said second nodes; at least one of said at least two of said first nodes; at least one third node.

The means for updating said information may be provided in at least one of:
said one of said second nodes; at least one of said at least two of said first nodes; at least one third node.

The respective information on a plurality of allocatable parameter values being may be stored in respective first nodes, one first node and/or a third node.

According to another aspect, there is provided apparatus for use in a first node comprising means for receiving information relating to unused parameter values, said parameter values being usable in communications to distinguish transmissions from different transmitting nodes; and means for selecting at least one of said unused parameter values for use by one of said different transmitting nodes.

The first node may comprise said one transmitting node.

The received information may comprise a list of available parameter values.

The means for receiving may be arranged to receive said information from at least one second node.

The means for receiving may be arranged to receive information from a plurality of second nodes.

The apparatus may comprise means for providing a selection message indicating which of said unused parameter values has been selected.

The selection message may be for said at least one second node.

The apparatus may comprise means for providing a request message to be sent to said at least one second node requesting said information.

The request message may comprise one of more of received power for signals received by said first node; physical identity; network unique identity for said first node; transmission power used by said first node; path loss to neighbouring cells; and information identifying neighbouring cells.

The apparatus may comprise means for determining at least one second node serving a respective neighbouring cell.

The selection message may be for sending to said neighbouring cells.

The first node may comprise a base station; a base station serving a macro cell; a base station serving a micro cell; a gateway node; or a central node; a SON entity.

The first node may comprise a base station serving a micro cell, said micro cell overlying a macro cell.

The apparatus may comprise means for providing a message when said transmitting node is to be shut down.

According to another aspect, there is provided apparatus for use in a node comprising means for providing a message comprising information relating to unused parameter values, said parameter values being usable in communications to distinguish transmissions from different transmitting nodes, said message for sending to a first node; and means, responsive to information received from said first node indicating one or more selected parameter values, for updating stored information relating to unused parameter values.

The means for updating may be configured to indicate said one or more selected parameter values as available in response to information indicating that said transmitting node is to be shut down.

According to another aspect of the invention, there is provided apparatus for use in a selecting node comprising means for selecting at least one unused parameter value for use by a transmitting node to distinguish transmissions by said transmitting node from transmissions from other transmission nodes; and means for causing information for at least one second node to be updated, said information relating to unused parameter values in response to said selection.

Said selecting node may comprises one of:
one of said second nodes; a gateway node; a central node; a central node; and a SON entity.

Said selecting node may comprises a second node and said means for causing may be configured to provide a message for at least one other second node to cause said at least one other second node to update said information.

The apparatus may comprise means for processing a request for an unused parameter value from said transmitting node.

The request may comprise one of more of:
received power for signals received by said transmitting node; physical identity; network unique identity for said transmitting node; transmission power used by said transmitting node; path loss to neighbouring cells; and information identifying neighbouring cells.

The apparatus may comprise means for providing a message for said transmitting node comprising information indicating the selected parameter value.

The means for providing said message for said transmitting node may provide said message for sending after processing information from at least one second node comprising an acknowledgement of information received relating to said selected parameter value.

The means for updating may be configured to indicate said one or more selected parameter values as available in response to information indicating that said transmitting node is to be shut down.

According to another aspect, there is provided an apparatus for use in a transmitting node comprising means for receiving at least one unused parameter value for use by said transmitting node to distinguish transmissions by said transmitting node from transmissions from other transmission nodes.

The apparatus may comprise means for providing a message indicating said apparatus is to be shut down.

The parameter values in any one of the above described aspects may comprises at least one of:
scrambling codes; identities; time slots; frequency bands.

According to another aspect, there is provided an integrated circuit comprising the apparatus described in relation to any of the above described aspects.

According to another aspect, there is provided an integrated circuit comprising a set of integrated circuits comprising the apparatus as described in relation to any of the above described aspects.

According to another aspect, there is provided a node comprising the apparatus of any one of the above described aspects.

According to another aspect, there is provided a method comprising determining from information on a plurality of allocatable parameter values associated with at least two first nodes which of said allocatable parameter values is available; allocating a parameter value which is commonly available with respect to said at least two of said first nodes to at least one second node; updating said information when said parameter is allocated to said one of said second nodes.

The determining may be provided by at least one:
said one of said second nodes; at least one of said at least two of said first nodes; at least one third node.

The allocating maybe provided by at least one of:
said one of said second nodes; at least one of said at least two of said first nodes; at least one third node.

The updating said information may be provided by at least one of:
said one of said second nodes; at least one of said at least two of said first nodes; at least one third node.

According to another aspect, there is provided a method comprising receiving information relating to unused parameter values, said parameter values being usable in communications to distinguish transmissions from different transmitting nodes; and selecting at least one of said unused parameter values for use by one of said different transmitting nodes.

The first node may comprise said one transmitting node.

The received information may comprise a list of available parameter values.

Said receiving may comprise receiving said information from at least one second node.

Said receiving may comprise receiving information from a plurality of second nodes.

The method may comprise providing a selection message indicating which of said unused parameter values has been selected.

The selection message may be for said at least one second node.

The method may comprise providing a request message to be sent to said at least one second node requesting said information.

The request message may comprise one of more of:
received power for signals received by said first node; physical identity; network unique identity for said first node; transmission power used by said first node; path loss to neighbouring cells; and information identifying neighbouring cells.

The method may comprise determining at least one second node serving a respective neighbouring cell.

The method may comprise sending said selection message sending to said neighbouring cells.

The first node may comprise:
a base station; a base station serving a macro cell; a base station serving a micro cell; a gateway node; and a central node; a SON entity.

The first node may comprise a base station serving a micro cell, said micro cell overlying a macro cell.

The method may comprise providing a message when said transmitting node is to be shut down.

According to another aspect, there is provided a method comprising providing a message comprising information relating to unused parameter values, said parameter values being usable in communications to distinguish transmissions from different transmitting nodes, said message for sending to a first node; and updating, responsive to information received from said first node indicating one or more selected parameter values, stored information relating to unused parameter values.

The updating may comprise indicating said one or more selected parameter values as available in response to information indicating that said transmitting node is to be shut down.

According to another aspect, there is provided a method comprising selecting at least one unused parameter value for use by a transmitting node to distinguish transmissions by said transmitting node from transmissions from other transmission nodes; causing information for at least one second node to be updated, said information relating to unused parameter values in response to said selection.

The method may be carried out by apparatus in a selecting node.

The selecting node may comprise one of:
one of said second nodes; a gateway node; a central node; a central node; and a SON entity.

The selecting node may comprise a second node. The causing may comprise providing a message for at least one other second node to cause said at least one other second node to update said information.

The method may comprise processing a request for an unused parameter value from said transmitting node.

The request may comprises one of more of:
received power for signals received by said transmitting node; physical identity; network unique identity for said transmitting node; transmission power used by said transmitting node; path loss to neighbouring cells; and information identifying neighbouring cells.

The method may comprise providing a message for said transmitting node comprising information indicating the selected parameter value.

The providing of said message for said transmitting node may occur after processing information from at least one second node comprising an acknowledgement of information received relating to said selected parameter value.

The updating may comprise indicating said one or more selected parameter values as available in response to information indicating that said transmitting node is to be shut down.

According to another aspect, there is provided a method comprising receiving at least one unused parameter value for use by a transmitting node to distinguish transmissions by said transmitting node from transmissions from other transmission nodes.

The method may comprise providing a message indicating said apparatus is to be shut down.

The parameter values of any of the above described aspects may comprise at least one of:
scrambling codes; identities; time slots; frequency bands.

The method of any of the above described aspects may be carried out in an integrated circuit, and a set of integrated circuits.

The method of any of the above described aspects may be carried out in one or more nodes.

According to another aspect, there is provide computer program comprising program code means configured to perform any of the steps of any of the methods described above when the program is run on at least one processor.

### BRIEF DESCRIPTION OF DRAWINGS

Reference will now be made by way of example only to the accompanying figures in which:
Figure 1 shows a cell arrangement associated with two home base stations, referred to hereinafter as H(e)NBs (Home E-UTRAN (evolved UMTS (universal mobile telecommunications system) terrestrial radio access network) node B);
Figure 2 shows an arrangement with the relationship between wide area base stations, referred to hereinafter as WA (wide area) (e)NBs and H(e)NBs;
Figure 3 shows a signalling procedure for network based code selection;
Figure 4 shows a signal flow for H(e)NB based code selection;
Figure 5 shows schematically a H(e)NB embodying the present invention;
Figure 6 shows a flow diagram of steps carried out by the H(e)NB in network based code selection;
Figure 7 shows a schematic diagram of a WA (e)NB;
Figure 8 shows a flow diagram of steps carried within a WA (e)NB in network based code selection;
Figure 9 shows a flow diagram of steps carried out within an H(e)NB in H(e)NB based code selection; and
Figure 10 shows a flow diagram of a method carried out within a WA (e)NB with H(e)NB based code selection.

### DESCRIPTION

Some of the embodiments discussed are in the context of the so-called LTE (long term evolution) radio system. This is sometimes referred to as 4G or fourth generation. This system uses code division multiple access CDMA and in particular wideband CDMA. In LTE the term eNB is used for the base station function.

A communication device, for example a user device can be used for accessing various services and/or applications provided by a communication system. In wireless or mobile systems, the access is provided via an access interface between a user device and an appropriate wireless access system. The user device can typically access wirelessly the communication system via at least one base station (eNB).

Some of the described embodiments relate to the self-configuration or self-installation of H(e)NB physical cell ID (identity) and scrambling codes within an LTE radio network. However, other embodiments can be used with any other communication network. For example, some embodiments may be implementable in a mobile communication network such as UTRAN where cell identification is initially based on a physical ID and correct assignment of a physical ID of a cell is used to provide a good network operation.

In the context of LTE, it is currently proposed to have 3 x 170 = 510 different scrambling sequence coding possibilities. This is coded by 3 different possibilities for the PSS (primary synchronization signal) and 170 different possibilities for the SSS (secondary synchronization signal). 504 physical cell identities are considered for assignment purposes to the different cells. There is a one-to-one mapping of the 504 physical cell IDs to 504 out of the 510 scrambling sequence coding possibilities. Six of the coding possibilities may be unused.

With one proposal for LTE, macro networks are based on cell planning. For example, prior to use, for a new eNB being brought into the field, a congestion free scrambling code or codes or physical cell ID will be selected for the radio cell(s) it provides. Generally, the physical cell IDs of the wide area, that is macro network, are available and avoid collisions with neighbouring cells. Collisions in physical cell identities will occur when two neighbouring NBs use the same scrambling code. This would lead to interference conditions hindering the identification of any of the colliding cells. In the following description, the node Bs serving the macro cells are described as WA (e)NB.

For pico and micro networks, planning particularly in the case of H(e)NBs is a time consuming and critical process since the high number of nodes are deployed per macro cell and in certain cases even the location where the small nodes are installed are not known in particular detail. The H(e)NBs thus serve macro and/or pico cells. Furthermore, a H(e)NB might be more frequently switched on and off allowing for a more dynamic use of possibly scarce number of scrambling code sequences.

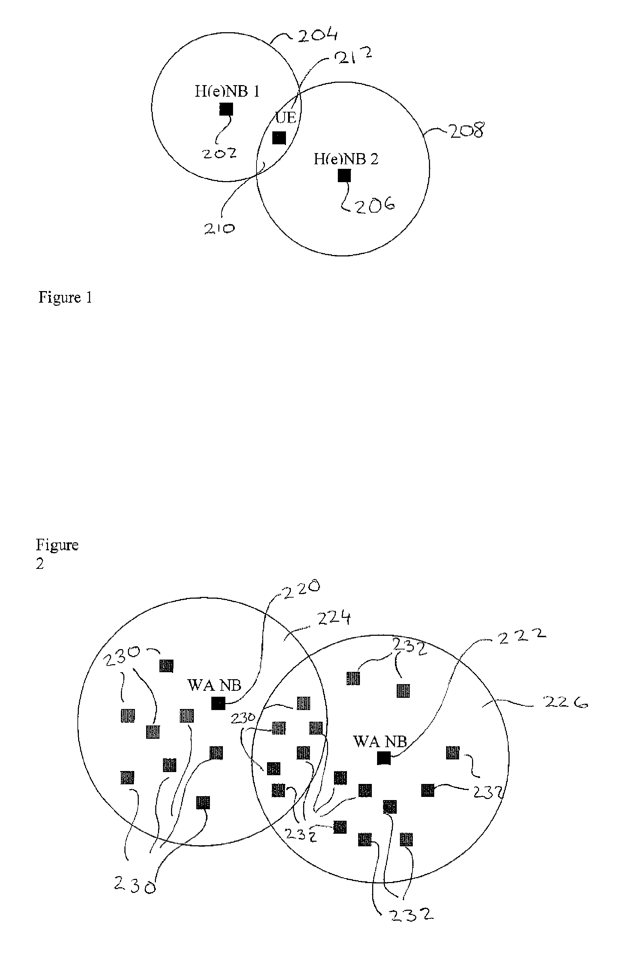

The H(e)NB may have a UE (user equipment) type receiver or similar functionality to monitor the neighbour cells in a similar manner as a UE does for handover measurements and cell selection in idle mode.
Consider the following scenario. The H(e)NB can scan for the physical IDs of neighbouring H(e)NBs and utilise the physical ID which is different. Consider the scenario shown in Figure 1. A first H(e)NB1 202 has a coverage area 204 associated therewith. A second H(e)NB 206 has second coverage area 208 associated therewith. As shown in Figure 1, there is a small region of overlap 210. If a user equipment 212 were in that overlapping region, there is the potential for difficulty if the two H(e)NBs have the same physical ID.

With the proposed arrangement of some embodiments, which might be implemented by means of a computer program or algorithm. The overlay wide area (e)NB cell would ensure that H(e)NB 202 and H(e)NB 206 have different physical IDs. In the centre area of a wide area cell, all codes or physical IDs of the reserved set of H(e)NB scrambling codes (50 to 400 physical IDs in dependence on implementations) would be utilised and given to the H(e)NBs in a unique manner. A wide are cell may be characterised by using the wide area scrambling code set or some information broadcast on the BCH (broadcast channel). For example, network based signalling like X2 or S1 may be utilised.

At the border area of wide area cells, part of the reserved set of H(e)NB codes would be used by the H(e)NBs which are under the control of one wide area node B control and part of the reserved set of codes will be used by the H(e)NBs which are under the control of the other wide area (e)NB. This can be shown in relation to Figure 2. Consider a first WA (e)NB 220 and a second WA (e)NB 222 with respective coverage areas 224 and 226. The squares shown in the respective coverage areas represent H(e)NBs. The H(e)NBs referenced 230 receive the first WA (e)NB 220 as the stronger cell and the H(e)NBs referenced 232 receive the second WA (e)NB 222 as the stronger cell.

For the respective H(e)NB which are not in the intersection area, with one algorithm, all codes or physical IDs of the reserved set of H(e)NB scrambling codes (50 to 400 physical IDs, depending on the deployment) could be utilised and given to those H(e)NBs not in the intersection area in a unique manner. The following embodiments can be used particularly by those H(e)NBs falling in the intersection area. However, it should be appreciated that some embodiments of the present invention can be equally used by any of the H(e)NBs. This may mean that in some situations a H(eNB) may only receive a single WA (e)NBs with a sufficient strength or a strength within a defined threshold, as explained further below, so that allocation is carried out by one of the WA (e) node Bs.

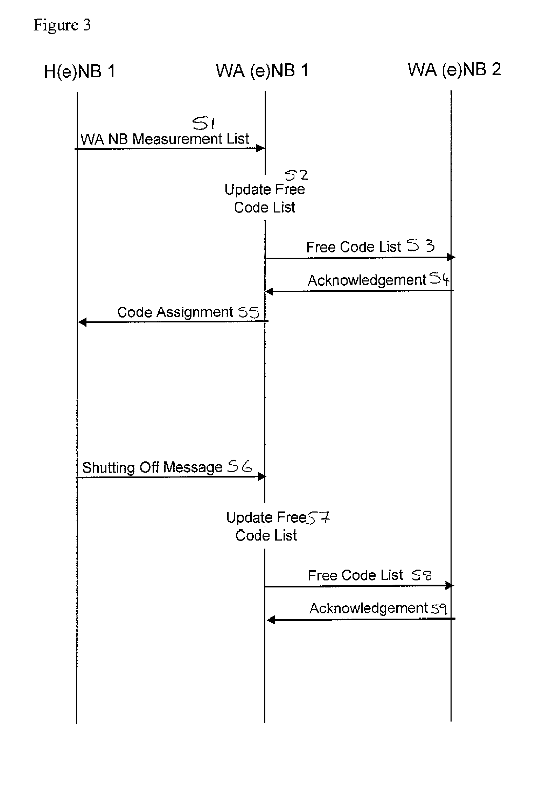

Reference is now made to Figure 3 which illustrates the procedure for network based code selection. The H(e)NB receiver scans when that H(e)NB is switched on for the first time, the code channel radio environment for the neighbouring cells. It should be appreciated that this can be carried out each time the H(e)NB is switched on. The H(e)NBN is arranged to generate a list which comprises one or more of the following: received power, physical ID, network unique (e)NB ID and (e)NB transmission power.

In one embodiment of the invention, the list may include the received power, the (e)NB transmission power and at least one and possibly both of the physical ID and network unique (e)NB ID. In one further embodiment, the H(e)NB may alternatively or additionally include in list comprising path loss to received/ detected cells.

In one embodiment of the present invention, a plurality of the information described in relation to the so called list is transmitted together. However, in alternative embodiments, one or more pieces of the information may be transmitted separately.

As represented by step Sl, the H(e)NB 10 sends the list to one of the WA (e)NB. The list is sent to a selected one of the WA (e)NB 20. The H(e)NB may be arranged that it will send the list to a predetermined one of the WA (e)NB. This may be determined when the H(e)NB is first setup. Alternatively, in one embodiment of the invention, the measurement list is sent to the WA (e)NB 20 which transmits the signal which recently has been most strongly received by the H(e)NB 10. This is represented by S1 of Figure 3.

In this embodiment, at least some, and in some embodiments all of the WA (e)NBs administrate a subset of physical ID exclusively reserved for H(e)NBs and the given subset is the same for all WA (e)NBs of for example one operator. The WA (e)NB 20 which received the list from the H(e)NB 10 selects one free code out of the reserved subset of physical IDs. The WA (e)NB 20 will then update the subset of free codes and remove the code allocated to the H(e)NB 10 from its list of free codes. This represented by the reference S2 in Figure 3. As represented by S3 the WA (e)NB 20, which allocate the free code, will transmit to one or more other wide area (e)node Bs which have been identified as neighbours. In one embodiment, the neighbours are identified by the H(e)NBl0 in its scanning step, this information being provided to the WA (e)NB 20 which allocates the code. In one embodiment, the signals from the WA (e)NBs, which are to be identified as neighbours, need to be received by the H(e)NB 10 with a similar path loss associated with the code allocating WA (e)NB 20. For example, the threshold could be up to a 10dB higher path loss. It should be appreciated that the threshold can be set and configured with any suitable value. Thus, as represented by S3, a message is sent to the one or more other wide WA (e)NBs which are identified as neighbours to indicate that these WA (e)NBs should also remove this code from their list of free codes. For the sake of simplicity, Figure 3 shows a single neighbouring WA (e)NB 30. However, it should be appreciated that in practice, there may be more than one neighbouring WA (e)NB 30.

In an alternative embodiment, the WA (e)NB 20 may make the determination as to which of the other WA (e)NBs are determined as neighbours. In another embodiment, the neighbours may be predetermined or preconfigured. The information identifying the neighbouring WA (e)NBs may be provided by the H(e)NB10 or the WA (e)NB 20.

As indicated by the reference S4, the one or more neighbouring WA (e)NB 30 send an acknowledgment back to the first WA (e)NB20 acknowledging this selection. The one or more further WA (e)NB 30 will update their list of available free codes to remove the code which has been allocated to the H(e)NB 10. If, for some reason, that code has already been used in the other neighbouring WA (e)NB30, the message sent back will indicate that to the first WA (e)NB20.

As indicated by reference S5 in Figure 3, the first WA (e)NB 20 will send the assigned code to the H(e)NB10. Thus, the H(e)NB will have information identifying the physical ID unscrambling code to use. For example, in one embodiment, network based signalling over X2 or S1 interface is utilised. X2 is the network interface between eNBs and S1 is the interface from eNB to the MME (Mobility Management Entity) and the access gateway.

It should be appreciated that if there is a problem with the allocated code, which identified by one of the neighbouring WA (e)NB 30, this will be signalled back to the first WA (e)NB 20, in place of the acknowledgment. The first WA (e)NB will then update its code list to find a new free code and repeat the required steps

The following steps may optionally be used in one or more embodiments. As indicated by signalling S6 from the H(e)NB 10 to the first WA (e)NB 20, the H(e)NB 10 may send a signal to the first WA (e)NB 20 indicating when the H(e)NB 10 is to be shut off.

As indicated by S7, the first WA (e)NB 20 will update its free code list to indicate that the code which has previously been allocated to the H(e)NB 10 is now available again. The first WA (e)NB 20 may send a message represented by S8 to the one or more further WA (e)NB 30 indicating the code which has been freed for further use. The one or more further WA (e)NBs 30 will update their lists of available codes to reintroduce the one code which was previously used by the H(e)NB10. The one or more further WA (e)NB 30 will then send an acknowledgment to the first WA (e)NB 20 as indicated in Figure 3 by reference S9.

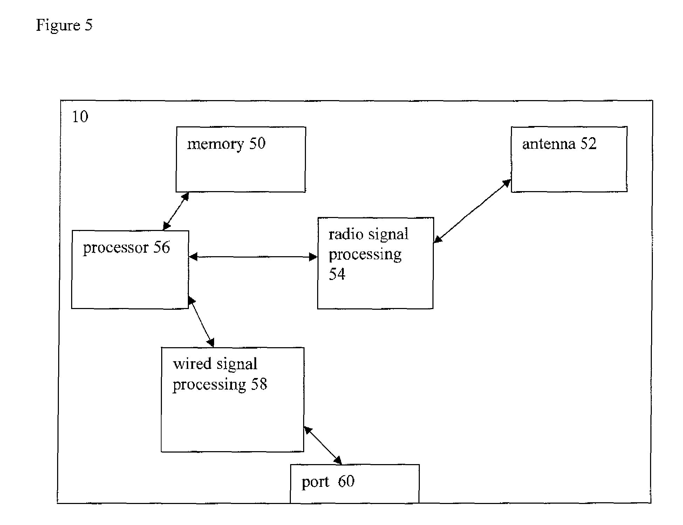

Reference is made to Figure 5 which schematically shows an H(e)NB 10. The H(e)NB 10 comprises an antenna 52. The antenna 52 is arranged to receive and transmit signals. The antenna 52 would be used to communicate with user equipment. Additionally, the antenna 52 is arranged to receive signals from neighbouring WA (e)NBs in order to make a determination, if appropriate, as to which one is the first WA (e)NB 20 and the one or more neighbouring WA (e)NBs 30.

The signals which are received by the antenna 52 pass to a wireless signal processing block 54. This signal processing block may comprise one or more integrated circuits which are able to reduce the received signals to the base band and to, if necessary, decode the signals. The radios signal processing block 54 is connected to a processor 56. In practice, this processor 56 may comprise one or more separate processors provided by one or more integrated circuits. The processor 56 is connected to a memory 50. The processor 56 is arranged to analyse the information which the processor receives from the radio signalling processing block 54. In particular, the processor 56 is arranged to generate the list mentioned previously. If necessary, the processor 56 will process the received information provided by the radio signal processing block 54 in order to provide the information for the list.

Some or more of the information for the list may be stored in the memory.

In one embodiment of the present invention, the H(e)NB 10 is connected to the first WA (e)NB20 via a wired connection represented by port 60.

The port 60 is connected to a wired signal processing block 58 which may process the received signal, for example to remove any encoding. The wired connection is used to receive the code assignment from the first WA (e)NB 20. The wired signal processing block 58 may comprise one or more integrated circuits.

It would be appreciated that the processor is also arranged to generate messages which are to be transmitted either via port 60 or antenna 52. The information which is to be output is passed by the processor 56 to either the radio signal processing block 54 or the wired signal processing block 58. These blocks put the information into a format which is appropriate for transmission either by wire or via a radio frequency.

It should be appreciated that in some embodiments, at least part of the function carried out by one or both of the radio and wired signal processing blocks 54 and 58 may be carried out via the processor block 56.

In one alternative embodiment, the communication with the first WA (e)NB 20 may only be via a wireless connection. In that embodiment, the port 60 and wired processing block 58 may be omitted.

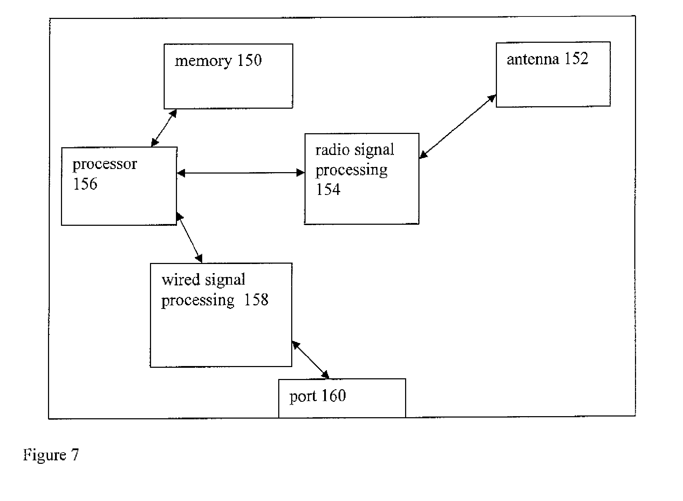

Reference is now be made to Figure 7 which shows schematically a WA (e)NB. As can be seen, schematically the WA (e)NB has similar functional blocks to those shown in Figure 5. In particular, the WA (e)NB comprises an antenna 152, a wireless signal processing block 154, a wired signal processing block 158, a processor 156 and a memory 150. Optionally a port 160 is also provided. These elements provide similar functions or functionalities to those described in relation to the H(e)NB. However, the WA (e)NB may in practice be far more complex in that it is arranged to service a much greater area and so may be required to support a very much larger number of user equipment and/or greater range of frequencies and/or codes.

It may well be that the number of integrated circuits providing you to the functionalities outlined in relation to the H(e)NB may be greater in a WA (e)NB.

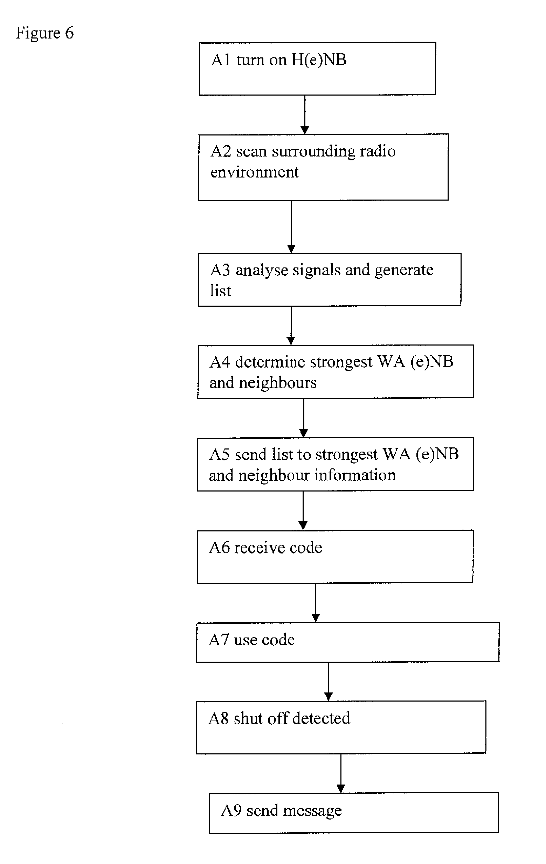

Reference is now made to Figure 6 which shows a flow-diagram of the functionality of the H(e)NB10, in relation to the embodiments previously described in relation to Figure 3. As indicated in step A1, the H(e)NB 10 is switched on. In step A2, the H(e)NB 10 is arrange to received signals from the surrounding WA (e)NB.

In step A3, the H(e)NB 10 is arranged to analyse the signals received in order to generate, if necessary, the required entry for the list described above. In this step, the H(e)NB will add any further information which is required for the list such as physical ID, network unique (e)NB ID and (e)NB transmission power.

In step A4, the H(e)NB 10 is arranged to determine the strongest WA (e)NB and optionally the one or more neighbour WA (e)NB. This may be determined from the information received in step A2.

In step A5, the H(e)NB is arranged to send to the determined strongest WA (e)NB, i.e. the first WA (e)NB 20 the list generated in step S3.

In step A6, the H(e)NB is arranged to receive the allocated code.

In step A7, the H(e)NB is arranged to use the code when communicating, for example, with user equipment.

In step A8, a shut down instruction or command, or the like is detected. In response to that command, the H(e)NB is arranged to send a message in step A9, indicating that shut off is about to occur, to the first WA (e)NB.

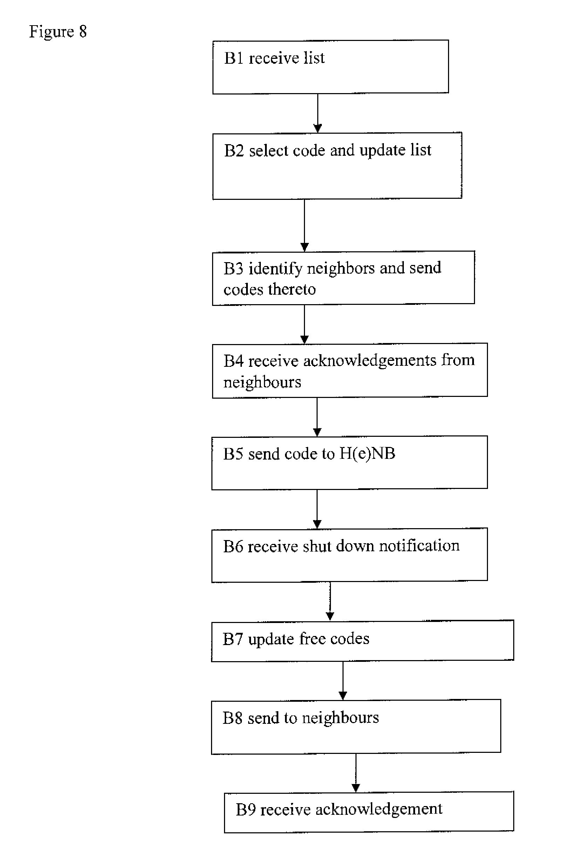

Reference is now made to Figure 8 which shows in the WA (e)NB in relation to the embodiments described with reference to Figure 3.

In step B1, the WA (e)NB 20 is arranged to receive the information from the H(e)NB 10.

In step B2, in response to the received information from the H(e)NB, the first WA (e)NB20 is arranged to select an available code and update its list of available codes to remove the selected code.

In step B3, the neighbouring WA (e)NB 30 are identified by any of the processes described previously and the first WA (e)NB20 is arranged to send information identifying the code has been allocated to the neighbours.

In step B4, the first WA (e)NB 20 is arranged to check for acknowledgments from the neighbour WA (e)NBs 30. Once the acknowledgments have all been received (including any retransmissions necessary in order to obtain those acknowledgments, the first WA (e)NB 20 is arranged to send the code which has been assigned to the H(e)NB. This occurs in step B5.

In step B6, the notification is received by the first WA (e)NB 20 from the H(e)NB 10 indicating that shut-down of the H(e)NB is to occur. In response to that message, in step B7, the first WA (e)NB updates the list of free codes to re-include the code that was previously used by the H(e)NB 10.

In step B8, the first WA (e)NB 20 is arranged to send this information about the code being available again to the neighbour WA (e)NBs 30.

In step B9, the WA (e)NB 20 waits to receive acknowledgments from the WA (e)NB 30, carrying out any necessary retransmissions.

It should be appreciated that the message sent from the WA (e)NB 20 with the free code list to the WA (e)NB 30 can take any suitable form. For example, the message may simply include the code which is to be removed or to be added to the list maintained by the respective WA (e)NB 30. There may be an indicator to indicate if the code is to be added or removed from the list. In one alternative embodiment, the message may instead include all of the codes which are currently available or may include all of the codes which are currently unavailable. It is also possible that in one embodiment, the message may comprise all of the codes with an indication as to whether this particular code is available or not.

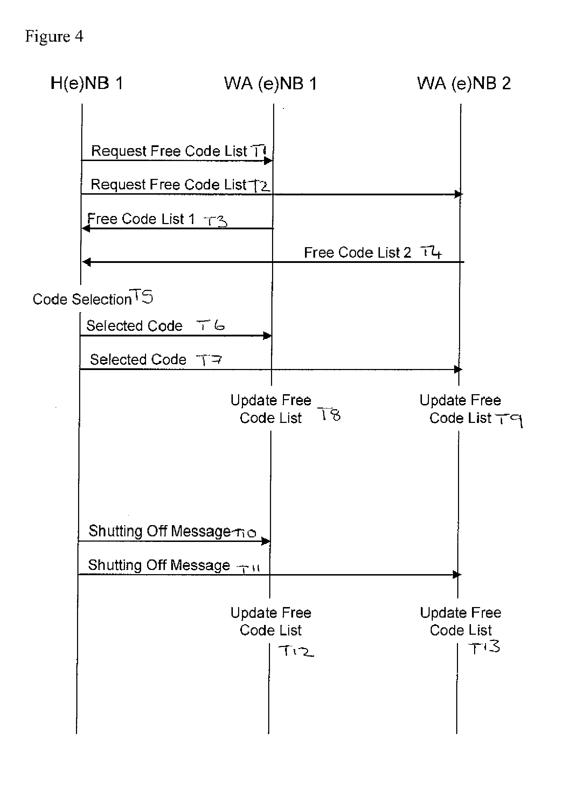

Figure 4 which illustrates the procedure where the H(e)NB 10 is arranged to select the required code.

When the H(e)NB switched on for the first time, or optionally each time the H(e)NB is switched on, the receiver is arranged, similar to the embodiment described in relation to Figure 3, to scan the co-channel environment of wide area neighbouring cells and can generate a list as described in relation to the procedure for network code selection. It should be appreciated that this list can include any of the options previously described.

As indicated by steps T1 and T2, the H(e)NB 10 is arranged to send requests for free code lists to one or more WA (e)NBs 20.

In one alternative embodiment of the present invention, the H(e)NB10 sends a request for a free code list to a single WA (e)NB. The selected WA (e)NB can be selected on any suitable basis and may, for example, be the one from which the strongest signal is received or may be selected from a subset of WA (e)NBs from which signals exceeding a threshold strength may be received. For example, WA (e)NBs may be considered up to an adjustable threshold, for example, a difference in signal strength to the strongest WA (e)NB. For example, the threshold may be around 10dB path loss compared to the strongest WA (e)NB.

In the arrangement shown in Figure 4, the H(e)NB10 is shown as sending the signals to two WA (e)NBs. However, this is by way of example only and as mentioned previously, the request may be sent to a single one of the WA (e)NBs or more than two. The request may be sent simultaneously to each of the WA (e)NBs or may be sent in any order.

As indicated by steps T3 and T4, each of the WA (e)NBs which has received the request from the H(e)NB will provide a response indicating the respective free codes available.

As represented by T5, the H(e)NB uses the received code lists to select one of the free codes. The H(e)NB will select a code which is available in all of the lists received. However, there may be specific circumstances where the code selected may not be included in all free code lists.

As represented by signalling T6 and T7, the H(e)NB 10 is arranged to transmit to each of the WA (e)NBs from which a code list has been received, the code which has been selected. Again, these messages can be transmitted together or in any order.

As represented by steps T8 and T9, each of the respective WA (e)NBs which provided code lists to the H(e)NB updates their free code list.

Optionally, when it is determined by the H(e)NB 10 that it is to be shut off, the H(e)NB 10 is arranged to send a shut off message as indicated by signals T10 and T11 to each of the WA (e)NBs from which the free code list was received. In this way, each of the WA (e)NB is able to update the free code lists to include the code that was previously used by the H(e)NB10. This is represented by references T12 and T13 in Figure 4.

In this embodiment, the need for communication between the WA (e)NB in order to align the information on free codes can be removed as only individual lists need to be maintained and their update is triggered by the H(e)NB.

One example of how the H(e)NB selects a code will be described. Consider the following example. H(e)NB has the lowest path los to a first WA cell 1 and a similar path loss to a second WA cell 2. Path loss to all other cells is much higher than path loss to the first WA cell 1. Consider the case where the H(e)NB gets, for example, the following list from the two selected WA (e)NBs:
from the first WA (e)NB - free codes - 1 2 3
from the second WA (e)NB2 - free codes - 1 3

From this information, code 1 or code 3 is a valid selection for the H(e)NB scrambling code. Selection of code 2 could result in a code collision if the H(e)NB which has been allocated code 2 by the secondWA (e)NB is closely located to the H(e)NB under consideration.

It should be appreciated that the arrangement shown in Figure 4 can, for example, be modified to include aspects, for example, of the arrangement of Figure 3. For example, the H(e)NB may communicate with a single one of the WA (e)NB. The selected WA (e)NB will then communicate with the other WA (e)NBs to obtain the free code lists. All of these lists will then be forwarded to the H(e)NB. The H(e)NB will then make the required selection and forward information about this to the selected WA (e)NB. The selected WA (e)NB will then send this information to the other relevant WA (e)NBs. The WA (e)NB are then able to update their free code list.

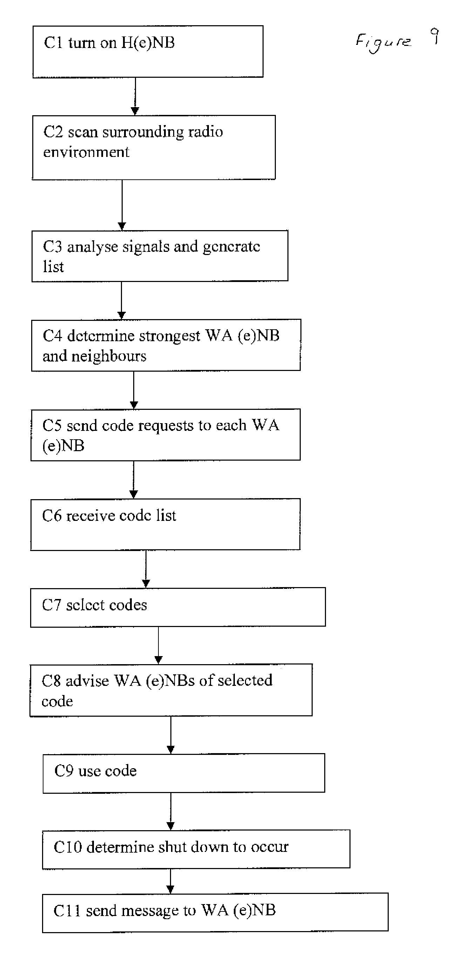

Reference is now made to Figure 9 which shows a flow-diagram of the steps carried out by the H(e)NB 10 in relation to the embodiments described in relation to Figure 4. It should be appreciated that in the embodiments where the H(e)NB is arranged to carry out the code selection, the H(e)NB will have a similar lock layout to that described in Figure 5. However, it should be appreciated that the functions carried out by the various block will of course differ, taking into account the different methods being carried out

Generally, steps C1 to C4 correspond generally steps A1 to A4 of Figure 6 and will not be described further.

In step C5, the request for a free code is sent to the one or more WA (e)NBs 20 and 30.

In step C6, the respective free codes are received from each of the WA (e)NBs to which a code request has been sent.

In step C7, the H(e)NB 10 is arranged to select which code is to be used.

In step C8, the H(e)NB1 0 is arranged to advise the respective WA (e)NBs which code has been selected.

Steps C9, C10 and C11 correspond generally to steps A7, A8 and A9. Step C11 is slightly different in that the message is sent to each of the relevant WA (e)NBs.

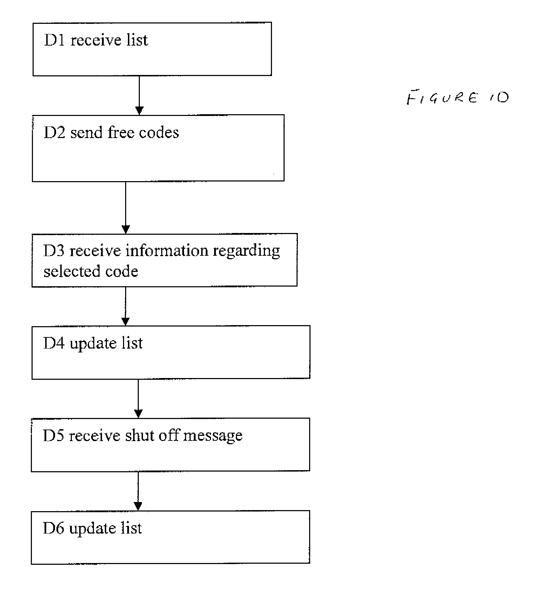

Reference is now made to Figure 10 which shows a flow-diagram for one of the WA (e)NB used in embodiments described generally in relation to Figure 4. The WA (e)NB may be similar to the arrangement described in relation to Figure 7.

In step D1, the WA (e)NB 20 is arranged to receive a request for free codes from the H(e)NB10. This can take any of the suitable forms described previously.

In step D2, the WA (e)NB is arranged to send information relating to the available codes to the H(e)NB 10. Again, this information can take any suitable format, as discussed previously.

In step D3, the WA (e)NB is arranged to receive information regarding the code which has been selected for use by the H(e)NB.

In step D4, the WA (e)NB updates its list to remove the code being used by the H(e)NB on the list of available codes.

In step D5, the WA (e)NB is arranged to receive a shut off message from the H(e)NB10. In response to that message, in step D6, the list of available codes is updated to include the code which has previously been used by the H(e)NB10.

In the previously described embodiments, a threshold has been described. The various thresholds may be adjusted by a SON functionality located in a centralized SON (Self Organized Network) server or node.

In one embodiment of the present invention, the WA (e)NBs may handle all requests for a free code list sequentially. In other words, only after the previous procedure has been terminated either by a failure or by an acknowledged code selection, the next request for a free code list is treated. In this way, the possibility of two H(e)NB selecting to the same free code is removed.

In one alternative embodiment, the handling of the allocation of the code can be done by a central SON entity such as an access gateway for femto nodes H(e)NBs instead of the WA (e)NB. In this alternative embodiment, the H(e)NB may be attached to different central SON entities and communication between those entities may need to occur in a manner similar to that outlined in relation to the WA (e)NBs.

Whilst embodiments have been described particularly in the context of an arrangement where macro cells are overlaying smaller cells, embodiments of the present invention may be used in an environment where there is only a single cell layer. In alternative embodiments of the present invention, it is possible to use the invention in a system where there are more than two overlapping layers of cells. Generally, each successive layer of cells will contain cells which are smaller than the cells in the previous layer.

Whilst some embodiments have been described in the context of H(e)NB cells, it should be appreciated that embodiments of the present invention can be used with larger cells such as macro cells. For example, some embodiments can be used with dynamic allocation of scrambling codes between adjacent cells.

Some embodiments have been described in the context of the allocation of a particular code. It should be appreciated that embodiments of the present invention can be used with any alternative parameter in addition or alternatively to codes. Generally, this parameter may be used by the eNB in order to communicate with user equipment or the like.

Embodiments of the present invention can be used for FDD (frequency duplex division) technologies and/or TDD (time division duplex) technologies in addition or alternatively to the code CDMA (code division multiple access) used in, for example, an LTE. In the context of FDD, the parameter may involve frequency allocation and in the context of TDD, the parameter may involve the allocation of a time slot. It should be appreciated that some embodiments of the present invention may use a combination of these technologies.

It should be noted that although certain embodiments have been described by way of example, with reference to certain exemplifying architectures, wireless networks, technologies and standards, embodiments may be applied to any other suitable forms of communication systems as well as those illustrated and described herein.

It should be appreciated that in some embodiments, one or more of the steps, particularly as described in relation to the flow-diagrams may be at least partially carried out by one or more computer programs or computer software running on one or more of appropriate processors.

As mentioned previously, the various processor and processing functions may be provided by one or more data processors provided by or more chips. It should be appreciated that an appropriately adapted computer program code product or product may be used for implementing the embodiments, when for example, loaded into an appropriate processing apparatus, for example in the processor 56 and/or one or more of the signal processing blocks 54 and 56, for example of Figure 5. The program code product for providing the operation may be stored on and be provided by an appropriate carrier medium. An appropriate computer program can be provided on a computer program recordable medium. One option would be to download the required program code to the one or more elements of the apparatus by means of a data connection. The data connection may be wired or wireless.

It is also noted herein that while the above describes exemplifying embodiments, there are several variations and modifications which be made to be these arrangements without departing from the scope of the present invention.

## Claims

1. A system comprising a plurality of nodes, information on a plurality of allocatable parameter values being associated with at least two first nodes, at least one second node being arranged to use at least one of said allocatable parameter values, said system comprising means for determining from said information for at least two of said first nodes which of said allocatable parameter values is available, means for allocating a parameter value which is commonly available with respect to said at least two of said first nodes to one of said second nodes and means for updating said information when said parameter is allocated to said one of said second nodes.

2. A system as claimed in claim 1, wherein said means for determining is provided in at least one:
said one of said second nodes; at least one of said at least two of said first nodes; at least one third node.

3. A system as claimed in claim 1 or 2, wherein said allocating means is provided in at least one of:
said one of said second nodes; at least one of said at least two of said first nodes; at least one third node.

4. A system as claimed in any of claims 1 to 3, wherein said means for updating said information is provided in at least one of:
said one of said second nodes; at least one of said at least two of said first nodes; at least one third node.

5. Apparatus for use in a first node comprising:
means for receiving information relating to unused parameter values, said parameter values being usable in communications to distinguish transmissions from different transmitting nodes; and
means for selecting at least one of said unused parameter values for use by one of said different transmitting nodes.

6. Apparatus as claimed in claim 5, wherein said first node comprises said one transmitting node.

7. Apparatus as claimed in claim 5 or 6, wherein said received information comprises a list of available parameter values.

8. Apparatus as claimed in any of claims 5 to 7, wherein said means for receiving is arranged to receive information from a plurality of second nodes.

9. Apparatus as claimed in any of claims 5 to 8, comprising means for providing a selection message indicating which of said unused parameter values has been selected.

10. Apparatus as claimed in any of claims 5 to 9, comprising means for providing a request message to be sent to said at least one second node requesting said information.

11. Apparatus as claimed in any of claims 5 to 10, wherein said request message comprises one of more of:
received power for signals received by said first node; physical identity; network unique identity for said first node; transmission power used by said first node; path loss to neighbouring cells; and information identifying neighbouring cells.

12. Apparatus as claimed in any of claims 5 to 11, wherein said first node comprises a base station serving a micro cell, said micro cell overlying a macro cell.

13. Apparatus as claimed in any of claims 5 to 12, comprising means for providing a message when said transmitting node is to be shut down.

14. Apparatus for use in a node comprising:
means for providing a message comprising information relating to unused parameter values, said parameter values being usable in communications to distinguish transmissions from different transmitting nodes, said message for sending to a first node; and
means, responsive to information received from said first node indicating one or more selected parameter values, for updating stored information relating to unused parameter values.

15. Apparatus for use in a selecting node comprising:
means for selecting at least one unused parameter value for use by a transmitting node to distinguish transmissions by said transmitting node from transmissions from other transmission nodes;
means for causing information for at least one second node to be updated, said information relating to unused parameter values in response to said selection.

16. Apparatus for use in a transmitting node comprising:
means for receiving at least one unused parameter value for use by said transmitting node to distinguish transmissions by said transmitting node from transmissions from other transmission nodes.

17. Apparatus as claimed in any of claims 5 to 17, wherein said parameter values comprises at least one of:
scrambling codes; identities; time slots; frequency bands.

18. A method comprising:
receiving information relating to unused parameter values, said parameter values being usable in communications to distinguish transmissions from different transmitting nodes; and
selecting at least one of said unused parameter values for use by one of said different transmitting nodes.

19. A method comprising:
providing a message comprising information relating to unused parameter values, said parameter values being usable in communications to distinguish transmissions from different transmitting nodes, said message for sending to a first node; and
updating, responsive to information received from said first node indicating one or more selected parameter values, stored information relating to unused parameter values.

20. A method comprising:
selecting at least one unused parameter value for use by a transmitting node to distinguish transmissions by said transmitting node from transmissions from other transmission nodes;
causing information for at least one second node to be updated, said information relating to unused parameter values in response to said selection.

21. A method comprising:
receiving at least one unused parameter value for use by a transmitting node to distinguish transmissions by said transmitting node from transmissions from other transmission nodes.

22. A computer program comprising program code means configured to perform any of the steps of claim 18 to 21 when the program is run on at least one processor.
